Europäisches Patentamt

European Patent Office

Office européen des brevets

(19)

(11) Veröffentlichungsnummer: **0 275 959 B1**

(12) **EUROPÄISCHE PATENTSCHRIFT**

(45) Veröffentlichungstag der Patentschrift: **29.05.91**

(51) Int. Cl.⁵: **B60B 33/00**

(21) Anmeldenummer: **88100633.2**

(22) Anmeldetag: **19.01.88**

(54) **Feststellbare Rolle.**

(30) Priorität: **20.01.87 DE 8700869 U**

(43) Veröffentlichungstag der Anmeldung:
**27.07.88 Patentblatt 88/30**

(45) Bekanntmachung des Hinweises auf die
Patenterteilung:
**29.05.91 Patentblatt 91/22**

(84) Benannte Vertragsstaaten:
**CH DE FR GB LI**

(56) Entgegenhaltungen:
**DE-A- 3 130 100**
**DE-B- 1 105 344**
**FR-A- 700 821**
**US-A- 4 503 943**

(73) Patentinhaber: **Gross + Froelich GmbH & Co.**
**Müllerstrasse 12 - 14**
**W-7000 Stuttgart 1(DE)**

(72) Erfinder: **Fink, Alois**
**Steinhaldenweg 15**
**W-7062 Rudersberg(DE)**
Erfinder: **Hezel, Bruno**
**Am Wildwechsel 2**
**W-7000 Stuttgart 80 Rohr(DE)**

(74) Vertreter: **KOHLER SCHMID + PARTNER, Patentanwälte**
**Ruppmannstrasse 27**
**W-7000 Stuttgart 80(DE)**

## Beschreibung

Die Erfindung betrifft eine feststellbare Rolle, insbesondere für fahrbare Teile von Ladeneinrichtungen, mit zwei zu beiden Seiten eines Tragkörpers auf einer den Tragkörper durchsetzenden, gemeinsamen Achse angeordneten Rädern, mit einem zwischen den Rädern am Tragkörper schwenkbar gelagerten Betätigungshebel, der mit einem ersten Arm über den Umfang der Räder hinausragt und einen zweiten Arm aufweist, an dem ein ebenfalls zwischen den Rädern am Tragkörper angebrachtes, bewegliches Arretierglied federnd anliegt, das durch Verschwenken des Betätigungshebels von dessen zweitem Arm von einer Ruhestellung in eine Arretierstellung bringbar bzw. zur Rückkehr in die Ruhestellung freigebbar ist, derart, daß der zweite Arm des Betätigungshebels in der Arretierstellung in bezug auf eine die Schwenkachse des Betätigungshebels und die Eingriffsstelle des Arretiergliedes verbindende Linie eine Übertotpunktlage einnimmt, wobei ein Abschnitt des Arretiergliedes in der Arretierstellung über die die Räder tangierende Ebene, die bei bestimmungsgemäß montierter Rolle und bei in der Ruhestellung befindlichem Arretierglied mit der Lauffläche für die Räder zusammenfällt, übersteht und dadurch die Räder von der Lauffläche abhebt.

Aus der DE-A-31 30 100 ist eine Rolle bekannt, deren Räder hohl ausgebildet sind und dem Tragkörper zugewande Radkränze aufweisen. Das Arretierglied wird von einem einseitigen Hebel gebildet, der an seinem freien Ende in die hohlen Räder eingreifende seitliche Ansätze aufweist. In der Arretierstellung kommen diese Ansätze mit einer an der Innenseite der Radkränze angebrachten Verzahnung in Eingriff, so daß in der Arretierstellung die Räder der Rolle blockiert sind.

Solche Rollen haben den Zweck, einerseits bei Bedarf ein leichtes Verschieben von Möbelstücken zu erlauben, andererseits aber bei blockierten Rädern ein ungewolltes Verschieben von Möbelstükken zu verhindern. Für viele Zwecke ist die dadurch erreichte Standfestigkeit der Möbel ausreichend. Wenn jedoch die Gefahr besteht, daß die Möbel heftigen Stößen ausgesetzt werden, die Möbel selbst kein sehr großes Gewicht haben und außerdem auf einem glatten Boden stehen, kann die Haftung der blockierten Räder unzureichend sein, um einem Möbelstück die gewünschte Standfestigkeit zu geben. Besonders beansprucht sind in dieser Hinsicht Ladeneinrichtungen, und zwar insbesondere fahrbare Kleidergestelle, die in Verkaufsräumen aufgestellt werden, wo sie dann, insbesondere bei großem Andrang, manchmal heftigen Stößen durch die Kunden ausgesetzt sind.

Mit der DE-B-11 05 344 ist eine Rolle der eingangs genannten Art bekannt, die einen Betätigungshebel besitzt, der mit einem ersten Arm über den Umfang der Räder hinausragt und über diesen Arm betätigbar ist. Der andere Arm ist mit einem Arretierglied verbunden, welches aus einer Lasche und einem Stopper besteht. Dieser Stopper ist aus einer Ruhestellung, in der er zwischen den beiden Rollen sich befindet, in eine Arretierstellung bringbar, in der er über die Auflagefläche der Räder übersteht. Diese Rolle weist den Nachteil auf, daß lediglich durch die Ausgestaltung des Betätigungshebels eine Übersetzung für die Hubkraft des Stoppers erzielbar ist. Sollen jedoch besonders schwere Gegenstände arretiert werden, so besteht nur eine Möglichkeit die Kraft zu reduzieren, nämlich durch Verlängerung des die Räder überragenden Armes des Betätigungshebels. Dies kann jedoch nur in Grenzen erfolgen, da der überstehende Teil hinderlich ist und mitunter sogar eine Gefahrenquelle darstellt.

Aus der FR-700 821 ist ebenfalls eine feststellbare Rolle mit einem Betätigungshebel bekannt, der außerhalb des Umfangs der Räder angeordnet ist. Mittels des Betätigungshebels ist ein Stopper aus einer Ruhestellung, in der er oberhalb des Bodens sich befindet, in eine Arretierstellung, in der er über die Auflagefläche des Rades übersteht, bringbar. Auch bei dieser Ausgestaltung ist eine Reduzierung der Betätigungskraft nur durch Verlängerung des die Räder überragenden Betätigungshebels erzielbar. Auch hier sind einer Verlängerung Grenzen gesetzt, da der Hebel sonst eine Gefahr darstellt.

Der Erfindung liegt daher die Aufgabe zugrunde, eine Rolle der eingangs genannten Art derart auszubilden, daß auch schwere Möbelstücke bequem arretierbar sind.

Dies wird erfindungsgemäß dadurch erreicht, daß das Arretierglied als Hebel ausgebildet ist und mit dem einen Ende um einen mit waagerechtem Abstand zur Radachse und zur Schwenkachse des Betätigungshebels liegenden ortsfesten Lagerbock schwenkbar ist.

Diese Ausgestaltung hat den Vorteil, daß neben dem Betätigungshebel eine weitere Übersetzung durch das als Hebel ausgebildete Arretierglied erzielbar ist. Da das Arretierglied mit seinem einen Ende ortsfest festgelegt ist, ist durch den Angriffspunkt des Betätigungshebels am Arretierglied die weitere Übersetzung erzielbar, ohne daß der Betätigungshebel selbst, insbesondere der den Umfang der Räder überragende Arm, verlängert wird.

Je nach der Ausführungsform der Rolle und dem Anwendungszweck kann der genannte Abschnitt des Arretiergliedes im Bereich des von der Achse der Räder auf die genannte Ebene gefällten Lotes oder aber, wenn die Rolle mit einer zu der genannten Ebene vertikalen Schwenkachse versehen ist, auch im Bereich der Verlängerung der Schwenkachse angeordnet sein. Die erste Ausführungsform hat den Vorteil, daß die Abstützung des Möbels über die Rolle stets an der gleichen Stelle erfolgt, unbhängig davon, ob die Rolle selbst oder aber das Arretierglied auf der Lauffläche aufsitzt. Daher ergeben sich bei dem Einrücken oder Lösen der Arretierung keine nennenswerten Verschiebungen. Andererseits besteht aber immer noch die Gefahr, daß bei Rollen, die eine vertikale Schwenkachse aufweisen, auch dann noch unter dem Einfluß von auf das Möbelstück ausgeübten Seitenkräften eine Schwenkbewegung um diese Achse eintritt, die unerwünscht ist. Eine solche Schwenkbewegung ist dann nicht möglich, wenn der auf der Lauffläche aufsitzende Abschnitt des Arretiergliedes im Bereich der Verlängerung der Schwenkachse der Rolle angeordnet ist.

Besonders stabile Verhältnisse lassen sich dann erzielen, wenn der Betätigungshebel in bezug auf die genannte Ebene senkrecht über der Stelle am Tragkörper schwenkbar gelagert ist, an der der Arretierhebel in der Arretierstellung mit dem genannten Abschnitt über diese Ebene übersteht. Gleichzeitig führt eine solche Anordnung auch zu konstruktiv günstigen Gestaltungen. So kann insbesondere dann, wenn der Abschnitt, mit dem das Arretierglied auf der Lauffläche aufsitzt, im Bereich des von der Achse der Räder auf die genannte Ebene gefällten Lotes angeordnet ist, der Betätigungshebel auf der gleichen Achse gelagert sein wie die Räder. Es entfällt dann eine besonders Lagerstelle für den Betätigungshebel. Der Betätigungshebel kann dann in einfacher Weise mit einem gabelförmigen Abschnitt den Tragkörper umgreifen. Ebenso kann auch das Arretierglied ein gabelförmiges Ende aufweisen, mit dem es im Bereich seiner im Abstand von der Achse der Räder angeordneten Lagerstelle den Tragkörper umgreift. Eine besonders stabile Führung des Arretierglieds kann dann dadurch erzielt werden, daß es einen U-förmigen Querschnitt hat und der Betätigungshebel zwischen die Wandungen des Arretiergliedes eingreift.

Um ein Anheben sehr stark belasteter Rollen mit geringem Kraftaufwand zu gewährleisten, sieht eine weitere Ausführungsform der Erfindung vor, daß der Betätigungshebel nicht an dem Arretierglied unmittelbar anliegt, sondern mit ihm durch einen Kniehebel verbunden ist. Die Anwendung eines solchen Kniehebels bietet die Möglichkeit, bedeutend vergrößerte Übersetzungsverhältnisse zu erzielen und demgemäß die zum Arretieren der Rolle benötigten Kräfte bedeutend zu reduzieren. Dabei kann eine besonders stabile Ausführungsform dadurch erzielt werden, daß der Kniehebel zwischen den Wandungen der im Querschnitt U-förmig ausgebildeten Betätigungs- und Arretierglieder gelagert ist.

Für die kostengünstige Herstellung solcher Rollen ist es anzustreben, daß die Arretiereinrichtung an einer nicht arretierbaren Rolle nachträglich angebracht werden kann, also die arretierbare Rolle aus den gleichen Grundelementen besteht wie eine nicht-arretierbare Rolle, Auch in dieser Hinsicht ist die Lagerung des Betätigungshebels auf der Räderachse günstig, weil der Betätigungshebel nach Bedarf eingebaut oder weggelassen werden kann. Ähnlich ermöglicht es auch die Ausbildung des Arretierglieds mit einem den Tragkörper umgreifenden, gabelförmigen Ende, dieses Arretierglied nur bei Bedarf, beispielsweise mittels eines Stiftes, an dem Tragkörper zu lagern oder nicht. Eine besonders vorteilhafte Art der Anbringung eines solchen Arretierglieds am Tragkörper besteht darin, das Arretierglieds an seinem gabelförmigen Ende mit einem abgeflachten Lagerstift zu versehen und am Tragkörper einen Lagerblock anzubringen, der eine Lagerbohrung für den Lagerstift aufweist, die über einen Schlitz, dessen Breite geringer ist als der Durchmesser der Lagerbohrung, mit einer Außenseite des Lagerblockes verbunden ist. Der Lagerstift ist abgeflacht, so daß er in einer bestimmten Stelle durch den Schlitz hindurchpaßt, dann aber in der Betriebsstellung in dem Schlitz gefangen ist, weil dann seine Abflachung nicht mehr mit dem Schlitz fluchtet. Auf diese Weise ist es möglich, ein solches Arretierglied auf einfache Weise in die im Lagerblock befindliche Lagerbohrung einzuhängen.

Bei einer anderen, ebenfalls sehr einfachen Ausführungsform der Erfindung, die sich insbesondere für Rollen eignet, bei denen der über die Tangetialebene überstehende Abschnitt des Arretiergliedes in Verlängerung einer Schwenkachse der Rolle angeordnet ist, wird das Arretierglied von dem federnden Schenkel eines im wesentlichen U-förmigen Formteiles gebildet, dessen anderer Schenkel an der Unterseite des Tragkörpers befestigt ist. Ein solches zusätzliches Bauteil läßt sich besonders einfach bei Bedarf an dem Tragkörper der Rolle anbringen. Da die beim Arretieren zu übertragende Kraft senkrecht zur Unterseite des Tragkörpers gerichtet ist, brauchen die zur Befestigung des Formteiles am Tragkörper erforderlichen Mittel keine großen Kräfte aufzunehmen. So genügt es, wenn der andere Schenkel des Formteiles am Tragkörper mittels federnder Zungen und/oder Raststiften gehalten und fixiert ist, die eine einwandfreie Positionierung des Schenkels gewährleisten, im übrigen aber ausreichend elastisch sind, um ein einfaches Aufklipsen des Formteiles auf den Tragkörper zu ermöglichen.

Bei einer bevorzugten Ausführungsform der Erfindung weist der am Tragkörper anliegende Schenkel des Formteiles an seiner dem federnden Schenkel zugewandten Seite eine Lagerschale für die Schwenkachse des Betätigungshebels auf. Es brauchen daher auch für den Betätigungshebel keine besonderen Lagerstellen am Tragkörper angebracht zu werden. Dabei kann der Betätigungshebel vorteilhaft aus zwei parallelen Teilen bestehen, die zu beiden Seiten des Formteiles angeordnet sind und am eine Ende durch eine als Pedal dienende Platte und am anderen Ende durch einen Quersteg miteinander verbunden sind, der sich in einer zur Längsrichtung des Betätigungshebel im wesentlichen senkrechten Ebene erstreckt und von dessen Rändern der eine die Schwenkachse des Betätigungshebels und der andere das Ende des am Arretierhebel anliegenden zweiten Armes des Betätigungshebels bildet. Ein solcher Betätigungshebel braucht also lediglich zwischen die federnden Schenkel des U-förmigen Formteiles eingeführt zu werden. Dabei kann dann der die Schwenkachse des Betätigungshebels bildende Rand des Quersteges in die Lagerschale eingreifen und darin von dem anliegenden anderen Schenkel des U-förmigen Gliedes gehalten werden. Dabei kann dann der das Arretierglied bildende federnde Schenkel an seinem Ende ein den überstehenden Abschnitt bildendes Kopfteil aufweisen, das an seiner dem anderen Schenkel zugewandten Seite eine am Ende des zweiten Armes des Betätigungshebels anliegende Gleitfläche und eine die Arretierstellung definierende Rastnut aufweist. Auch wenn ein derart ausgebildetes Formteil eine etwas kompliziertere Gestalt hat, so wird doch dadurch seine Funktionssicherheit bedeutend erhöht. Weiterhin führt diese kompliziertere Gestalt dann nicht zu nennenswerten Mehrkosten bei der Fertigung, wenn das Formteil aus einem federelastischen Kunststoff besteht und daher als Spritzgußteil ausgebildet werden kann.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen

Fig. 1 die Seitenansicht einer nach der Erfindung ausgebildeten, feststellbaren Rolle senkrecht zur Achse der Räder,

Fig. 2 einen Schnitt längs der Linie II-II durch die Rolle nach Fig. 1 in arretiertem Zustand,

Fig. 3 einen auch durch den Betätigungshebel und das Arretierglied geführten Schnitt ähnlich Fig. 2 durch die Rolle nach Fig. 1 in nicht arretiertem Zustand,

Fig. 4 einen Schnitt längs der Linie IV-IV durch die Rolle nach Fig. 2,

Fig. 5 einen Schnitt ähnlich Fig. 2 durch eine zweite Ausführungsform einer nach der Erfindung ausgebildeten Rolle in arretiertem Zustand,

Fig. 6 die Rolle nach Fig. 5, jedoch im nicht arretierten Zustand,

Fig. 7 einen Schnitt ähnlich Fig. 2 durch eine dritte Ausführungsform einer nach der Erfindung ausgebildeten Rolle in arretiertem Zustand

Fig. 8 die Rolle nach Fig. 7, jedoch im nicht arretierten Zustand, und

Fig. 9 eine Draufsicht in Richtung des Pfeiles IX in Fig. 7 auf die an den Tragkörper der Rolle aufgeklipste, das Arretierglied und den Betätigungshebel umfassende Baueinheit.

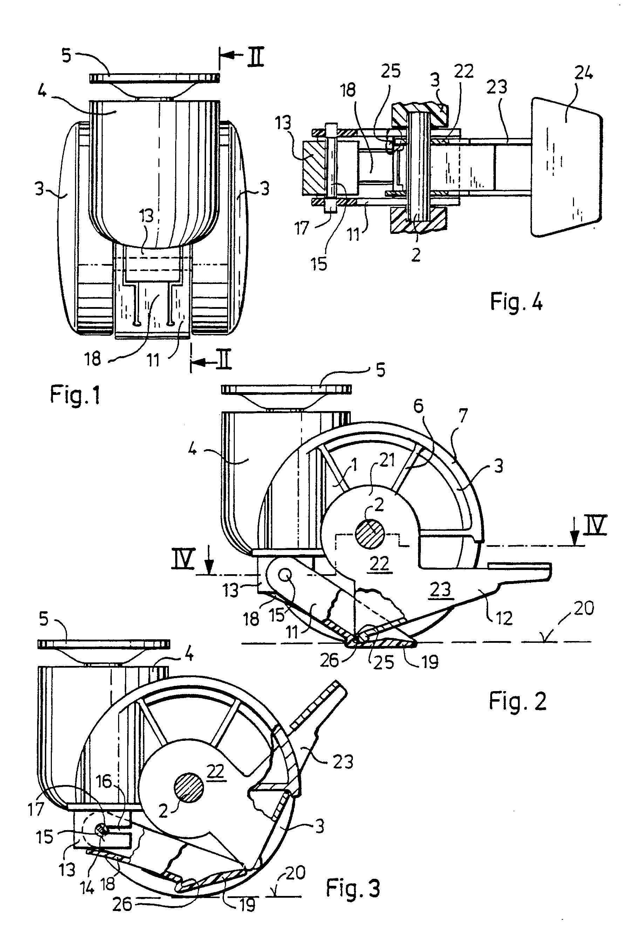

Die in den Fig. 1 bis 4 dargestellte Rolle weist einen Tragkörper 1 auf, der eine Bohrung für eine horizontale Achse 2, auf der zu beiden Seiten des Tragkörpers 1 Räder 3 angeordnet sind, und eine Aufnahme 4 für eine vertikale Schwenkachse 5 aufweist. Mit dem Tragkörper 1 ist über radiale Speichen 6 ein schutzblechartiges Bogenstück 7 verbunden, das den Raum zwischen den Rädern 3 auf einem sich an die Aufnahme 4 anschließenden Sektor nach oben hin abschließt.

Die in der bisher beschriebenen Ausbildung voll funktionsfähige Rolle ist nach der Erfindung mit einer Einrichtung zum Feststellen versehen, die aus einem Arretierglied 11 und einem Betätigungshebel 12 besteht. Das Arretierglied 11 wird von einem einseitigen Hebel gebildet, der in einem an der Unterseite der Aufnahme 4 für die vertikale Schwenkachse 5 angeordneten Lagerblock 13 gelagert ist und sich bis zu einer Stelle erstreckt, die im wesentlichen senkrecht unterhalb der Achse 2 für die Räder 3 liegt. Der Lagerblock 13 ist zu diesem Zweck mit einer Bohrung 14 für einen Lagerstift 15 versehen, an die sich ein Schlitz 16 anschließt, der sich horizontal in Richtung auf die der Achse 2 zugewandte Seite des Lagerblockes 13 erstreckt. Der Stift 15 ist an zwei einander gegenüberliegenden Stellen mit Abflachungen 17 versehen, durch die der Querschnitt des Stiftes so weit vermindert wird, daß der Stift mit diesen Abflachungen durch den Schlitz 16 paßt, dessen lichte Weite geringer ist als der Durchmesser der Bohrung 14. Es ist daher möglich, das mit dem Stift 15 versehene Arretierglied 11 in einer solchen Lage, daß die Abflachungen 17 parallel zu den Wandungen des Schlitzes 16 verlaufen, durch den Schlitz hindurch bis in die Bohrung 14 einzuführen, in der dann der Stift 15 nach Verschwenken des Arretiergliedes 11 sicher gehalten ist. Auf diese Weise kann das Arretierglied 11 mit seinem Lagerstift 15 ohne komplizierte Maßnahmen mit dem Tragkörper 1 schwenkbar verbunden werden. Wie ersichtlich, besteht im übrigen das Arretierglied 11 aus einem Kunststoffteil mit im wesentlichen U-förmigen Querschnitt, das mit seinen Wandungen den Lagerblock 13 umgreift. An dem mit dem Stift 15 versehenen Ende ist aus dem Quersteg des Arretiergliedes 11 eine Zunge 18 abgeteilt, die an der Unterseite des Lagerblockes 13 anliegt und bestrebt ist, das Arretierglied 11 entgegen dem Uhrzeigersinne zu verschwenken und in der in Fig. 3 dargestellten Ruhestellung zu halten. In dieser Ruhestellung befindet sich das mit einem abgeflachten Abschnitt 19 versehene Ende des Arretiergliedes 11 im Bereich zwischen den Rädern 3 oberhalb der an die Räder 3 gelegten Tangentialebene 20, welche die Laufebene für die Rolle bildet, wenn das Arretierglied die in Fig. 3 dargestellte Ruhestellung einnimmt.

Auch der Betätigungshebel 12 hat einen im wesentlichen U-förmigen Querschnitt und ist auf der gleichen Achse 2 gelagert wie die Räder 3. Zu diesem Zweck weist der Betätigungshebel 12 ein gabelförmiges Ende 21 auf, in dem sich Bohrungen für den Durchtritt der Achse 2 befinden und mit dem der Betätigungshebel den Trägkörper 1 umgreift. Der Betätigungshebel ist winkelförmig ausgebildet und weist einen sich nach unten erstreckenden Abschnitt 22 auf, an dem sich ein im wesentlichen horizontaler Abschnitt 23 anschließt, der bis über den Umfang der Räder 3 hinausreicht. An dem über die Räder überstehenden Ende sind die Schenkel des U-förmigen Profiles durch eine Platte 24 miteinander verbunden, die ein Pedal zur Betätigung der Arretiereinrichtung bildet.

An dem Ende zwischen dem vertikalen Abschnitt 22 und dem horizontalen Abschnitt 23 bildet das Arretierglied 11 eine Kante 25, die das Ende eines Hebelarmes bildet, an dem das Arretierglied 11 unter der von der Zunge 18 ausgeübten Federkraft ständig anliegt. In der in Fig. 3 wiedergegebenen Ruhestellung liegt das Arretierglied 11 mit seinem äußeren Ende an der Kante 25 an. Wird jedoch durch Druck auf die Platte 24 der Betätigungshebel 12 in Fig. 3 im Uhrzeigersinne verschwenkt, wird er in die in Fig. 2 dargestellte Lage gebracht, in der sich die Kante 25 im wesentlichen senkrecht unter der Achse 2 der Räder 3 befindet, wird dadurch das Arretierglied 11 ebenfalls im Uhrzeigersinne so weit verschwenkt, daß dessen an seinem freien Ende gelegene Abschnitt 19 bis über die mit der Laufebene zusammenfallende, zu den Rädern 3 tangentiale Ebene 20 hinausbewegt wird. Hierdurch werden die Räder 3 der Rolle von der Lauffläche abgehoben, auf der nunmehr das Arretierglied 11 mit seinem über die Tangentialebene 20 hinausragenden Abschnitt 19 aufsitzt. Damit ist der Kontakt zwischen der Rolle und der Lauffläche unterbrochen und durch einen Gleitkontakt ersetzt, dessen Größe und Oberflächenbeschaffenheit so gewählt werden kann, daß eine gute Standfestigkeit in arretiertem Zustand erzielt wird.

Während die Arretieranordnung in der Ruhestellung durch die Kraft der federnden Zunge 18 gehalten wird, findet in der in Fig. 2 wiedergegebenen Arretierstellung eine Selbstverriegelung statt, bei welcher die Kante 25 des Betätigungshebels in einer Übertotpunkt-Stellung an einem Anschlag 26 anliegt, der zu diesem Zweck an der Innenseite des Arretiergliedes 11 angebracht worden ist, mit der die Kante 25 des Betätigungshebels 12 in ständiger Berührung steht. Damit ist ohne weitere Sicherungsmaßnahmen gewährleistet, daß die Rollen auch bei größter Belastung nicht selbsttätig den Zustand der Arretierung verlassen können. Andererseits ist wegen der nur geringfügigen Überschreitung des Totpunktes keine große Kraft erforderlich, um durch Anheben der Platte 24 den Betätigungshebel 12 entgegen dem Uhrzeigersinn zu verschwenken und dadurch die Arretierung wieder aufzuheben.

Bei dem dargestellten Ausführungsbeispiel besteht das Arretierglied 11 aus einem elastischen Kunststoff, während der Betätigungshebel mit der Platte 24 aus Blech gefertigt ist. Es versteht sich jedoch, daß beide Teile sowohl aus Metall als auch aus Kunststoff hergestellt sein können. Die vorstehen erwähnte Kombination hat sich jedoch sowohl bezüglich Herstellung als auch Funktion als optimal erwiesen.

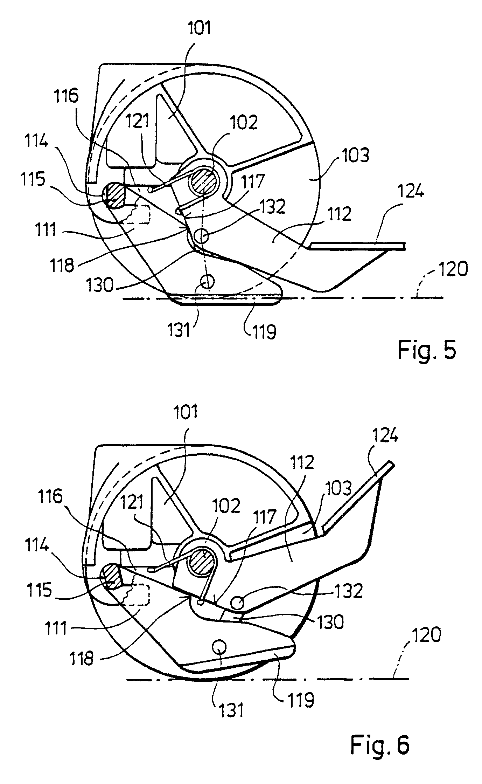

Ebenso wie bei der vorstehend beschriebenen Ausführungsform der Erfindung ist auch bei der Rolle nach den Figuren 5 und 6 auf der in einem Tragkörper 101 befestigten Achse 102, auf der sich Räder 103 befinden, ein Betätigungshebel 112 schwenkbar gelagert, dessen mit einer Platte 124 versehenes Ende über den Umfang der Räder 103 hinausragt. Weiterhin ist auch bei der Rolle nach den Figuren 5 und 6 ein Arretierglied 111 vorhanden, das an einem Ende mit einem Lagerstift 115 versehen ist, der eine Bohrung 114 im Drahtkörper 101 durchsetzt, die sich an einem Ende eines Schlitzes 116 befindet.

Abweichend von der zuvor beschriebenen Ausführungsform liegt der Betätigungshebel 112 jedoch nicht unmittelbar mit einem Arm an dem Arretierglied 111 an, sondern ist mit dem Arretierglied durch einen Kniehebel 130 miteinander verbunden. Sowohl das Arretierglied 111 als auch der Betätigungshebel 112 sind im Querschnitt U-förmig ausgebildet und es greift der Kniehebel 130 zwischen die Wandungen dieser beiden Bauteile ein und ist auf Stiften 131, 132 gelagert, die jeweils die Enden des Kniehebels 130 und die Wandungen des Arretiergliedes 111 bzw. des Betätigungshebels 112 durchsetzen.

Wie Fig. 5 zeigt, ist die Anordnung so getroffen, daß im arretierten Zustand der Rolle das Arretierglied 111 mit einem abgeflachten Abschnitt 119 an einer unterhalb der Achse 102 liegenden Stelle über die an den Umfang der Räder 103 angelegte Tangentialebene 120 übersteht und dadurch die Rolle vom Boden abhebt. In dieser Stellung nimmt der Kniehebel 130 in Bezug auf die Verbindungslinie zwischen der Achse 102 und dem unteren Lagerzapfen 131 des Kniehebels 130 eine Übertotpunkt-Stellung ein, die dadurch begrenzt wird, daß der Betätigungshebel 112 mit einer Flanke 117 an einer entsprechenden Nase 118 des Arretiergliedes 111 zur Anlage kommt. Wird der Betätigungshebel 112 aus dieser Arretierstellung gelöst, in dem er entgegen dem Uhrzeigersinn verschwenkt, also an seinem mit der Platte 124 versehenen Ende angehoben wird, so wird er nach Überschreiten der Totpunktlage von einer auf der Achse 102 angeordneten Schenkelfeder 121, die sich einerseits an dem Mittelteil 101 und andererseits an dem Betätigungshebel 112 abstützt, in die in Fig. 6 dargestellte Ruhelage gebracht und in dieser Ruhelage gehalten. Dabei wird aus das Arretierglied 111 über den Kniehebel 130 mitgenommen und in der in Fig. 6 dargestellten Lage gehalten.

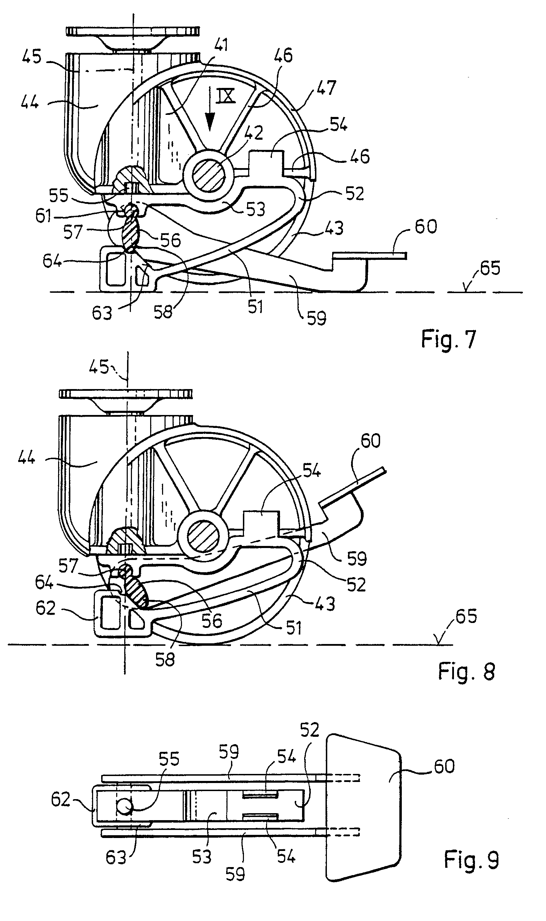

Bei der in den Fig. 7 bis 9 dargestellten Ausführungsform der Erfindung weist die Rolle wiederum einen Tragkörper 41 auf, in dem sich eine Achse 42 für zwei zu beiden Seiten des Tragkörpers 41 angeordnete Räder 43 befindet. Ferner weist der Tragkörper auch hier wieder eine Aufnahme 44 für eine vertikale Schwenkachse 45 auf und es ist ein zwischen den Rädern 43 angeordnetes, von Speichen 46 gehaltenes Bogenstück 47 vorhanden. Abweichend von dem zuvor beschriebenen Ausführungsbeispiel wird jedoch das Arretierglied 51 von dem federnden Schenkel eines im wesentlichen U-förmigen Formteiles 52 gebildet, dessen anderer Schenkel 53, der Kontur des Tragkörpers 41 folgend, an der Unterseite dieses Tragkörpers anliegt und durch zwei federnde Zungen 54 mit dem Tragkörper verbunden ist, welche nahe dem die Schenkel des Formteiles 52 verbindenden Übergang die einen horizontalen Abschnitt des Tragkörpers 41 bildende Speiche 46 umgreifen. Dabei erstrecken sich die freien Enden der Schenkel 51, 53 des Formteiles 52 in Richtung auf die Aufnahme 44 für die vertikale Schwenkachse 45, so daß sich die Enden dieser Schenkel in Verlängerung dieser Schwenkachse befinden. Im Bereich dieser Schwenkachse befindet sich an der dem Tragkörper 41 zugewandten Seite des der Befestigung des Formteiles 52 dienenden Schenkels 53 ein Zapfen 55, der zur Lagesicherung in eine entsprechende Bohrung an der Unterseite des Tragkörpers 41 eingreift.

Das Formteil 52 besteht aus einem federelastischen Kunststoff und ist so gestaltet, daß der das Arretierglied 51 bildende Schenkel bestrebt ist, sich mit seinem Ende an das Ende des anderen Schenkels 53 anzulegen. Daher dient zur Betätigung des Arretiergliedes 51 ein Hebel, der an einem Ende ein zwischen den Enden der beiden Schenkel angeordnetes Spreizglied inform eines Quersteges 56 aufweist, der einen als Schwenkachse dienenden wulstförmigen Rand 57 aufweist und dessen anderer Rand 58 das Ende eines Hebelarmes bildet, an dem das Arretierglied 51 mit seiner dem anderen Schenkel 53 zugewandten Seite unter Spannung anliegt. Der Quersteg 56 befindet sich an einem Ende eines Betätigungshebels, der zwei parallele Seitenteile 59 aufweist, die an ihrem einen Ende durch diesen Quersteg 56 miteinander verbunden sind, während an ihrem anderen Ende, das über den Umfang der Räder 43 hinausragt, eine Platte 60 angeordnet ist, die ein Pedal zum Verschwenken des Batätigungshebels bildet. Der Betätigungshebel ist unmittelbar in dem Formteil 52 gelagert, der am Ende seines Schenkels 53, der an der Unterseite des Tragkörpers 41 anliegt, an seiner dem Ende des Arretiergliedes 51 gegenüberliegenden Seite eine Lagerschale 61 zur Aufnahme des wulstförmigen Randes 57 des Quersteges 56 aufweist. Die Anordnung eines wulstförmigen Randes 57 am Quersteg 56 erlaubt es, die Lagerschale mit einem mehr als 180° erstreckenden Umfang auszubilden, so daß das Formteil 52 mit dem wulstförmigen Rand 57 in die Lagerschale 61 eingeklipst und dann darin formschlüssig gehalten werden kann. Allerdings wäre eine solche Sicherung des Betätigungshebels nicht unbedingt erforderlich, weil der Betätigungshebel zugleich durch den das Arretierglied 51 bildenden, federnden Schenkel in der Lagerschale gehalten würde.

An dem freien Ende des als Arretierglied 51 dienenden Schenkels des Formteiles 52 befindet sich ein verbreitertes und verstärktes Kopfteil 62, das ein im wesentlichen quaderförmiges, stabiles Druckstück bildet, jedoch an seiner dem anderen Schenkel 53 des Formteiles 52 zugewandten Seite eine schräge Flanke 63 aufweist, die eine Gleitfläche für den Rand 58 des Quersteges 56 bildet. Wenn das Arretierglied 51 die in Fig. 7 dargestellte Ruhelage einnimmt, liegt der Quersteg 56 auf einem Teil seiner Breite an der Flanke 63 an und wird in dieser Stellung durch die Federkraft des Arretiergliedes 51 gehalten. Dabei nimmt das mit der Platte 60 versehene Ende des Betätigungsgliedes eine obere Stellung ein, aus der das Betätigungsglied durch einen Tritt auf die Platte 60 durch Verschwenken im Uhrzeigersinne herausgebracht werden kann. Bei diesem Verschwenken gleitet der freie Rand 58 des Quersteges 56 an der Flanke 63 des Kopfteiles 62 entlang und drückt dadurch das Kopfteil 62 gegen die Federkraft des das Arretierglied 51 bildenden Schenkels nach unten, bis sich die Achse des Quersteges 56 im wesentlichen in Verlängerung der vertikalen Schwenkachse 45 befindet. Ein weiteres Verschwenken des Betätigungshebels wird einerseits dadurch gehindert, daß der freie Rand des Quersteges 56 in eine Rastnut 64 aufgenommen wird, die sich am oberen Rand der Flanke 63 befindet, und andererseits auch die Seitenteile 59 des Betätigungshebels mit ihrem unteren Rand auf dem Boden zum Aufliegen kommen, so daß auch hierdurch ein weiteres Verschwenken des Betätigungshebels nicht mehr möglich ist. Diese Ausbildung gewährleistet eine erhebliche Sicherheit gegen eine Überlastung der Arretiereinrichtung bei grober Behandlung.

Im übrigen nimmt auch hier wieder der Quersteg 56, wenn sich sein Rand 58 in der Rastnut 64 befindet, eine Übertotpunkt-Lage ein, so daß auch hier wieder eine selbständige Sicherung in der Arretierstellung stattfindet.

Wie zuvor beschrieben, tritt wiederum die Arretierung dadurch ein, daß der vom Kopfteil 62 gebildete, zur Arretierung dienende Abschnitt des Arretiergliedes 51 in der Arretierstellung über die die Räder 43 tangierende Ebene 65 übersteht, die normalerweise mit der Lauffläche für die Räder zusammenfällt, so daß die Arretierung durch Abheben der Räder von der Lauffläche erfolgt. Bei dieser Ausführungsform der Erfindung befindet sich der von dem Kopfteil 62 gebildete Abschnitt des Arretiergliedes 51 nicht unter der Achse 42 der Räder 43, sondern in Verlängerung der vertikalen Schwenkachse 45, so daß bei horizontalen Kräften kein Verschwenken mehr um die vertikale Schwenkachse 45 stattfinden kann, wie es bei dem eingangs behandelten Ausführungsbeispiel noch der Fall ist. Daher gewährleistet die zuletzt beschriebene Ausführungsform eine noch bessere Sicherung gegen ein Verschieben der Möbelteile bewirkende horizontale Kräfte. Gleichzeitig ist von besonderem Vorteil, daß die Arretiervorrichtung als Gesamtheit durch einfaches Anklipsen an dem Tragkörper der Rolle befestigt werden kann. Es ist daher jederzeit möglich, vorhandene Rollen mit solchen Arretiereinrichtungen zu versehen oder aber auch solche Arretiereinrichtungen selbst von bereits montierten Rollen wieder zu entfernen, wenn sie bei verändertem Einsatz der Möbel nicht mehr gebraucht werden oder sogar störend wirken. Da die bei der Arretierung auftretenden Kräfte das das Arretierglied 51 tragende Formteil 52 an die Unterseite das Tragkörpers 41 anpressen, brauchen die zur Befestigung des Formteiles 52 am Tragkörper 41 dienenden Glieder 54, 55 keine großen Kräfte aufzunehmen, so daß die beschriebene und dargestellte Art der Befestigung völlig unproblematisch ist.

Es versteht sich, daß die Erfindung nicht auf die dargestellten Ausführungsbeispiele beschränkt ist, sondern Abweichungen davon möglich sind, ohne den Rahmen der Erfindung zu verlassen. Dabei können Formteile auch dann Anwendung finden, wenn sich die Abstützstelle nicht in Verlängerung einer vertikalen Schwenkachse befindet, sowie auch eine Lagerung von Arretier- und/oder Betätigungsgliedern mittels Achszapfen am Tragkörper unabhängig von der Lage der Abstützstelle in bezug auf die Radachse bzw. eine vertikale Schwenkachse verwendet werden kann. Ebenso ist es möglich, zur Ausführung erfindungsgemäßer Rollen die unterschiedlichsten Materialien anzuwenden. Allerdings wird derzeit die Ausführungsform nach den Fig. 5 bis 7 als eine in ihrer Gesamtheit besonders vorteilhafte Verwirklichung der Erfindung angesehen, deren Wesen darin besteht, nicht in der gewohnten Weise die Räder zu bremsen, sondern statt dessen durch geeignete Standglieder vom Boden abzuheben.

**Ansprüche**

1. Feststellbare Rolle, insbesondere für fahrbare Teile von Ladeneinrichtungen, mit zwei zu beiden Seiten eines Tragkörpers (1) auf einer den Tragkörper durchsetzenden, gemeinsamen Achse (2) angeordneten Rädern (3), mit einem zwischen den Rädern am Tragkörper schwenkbar gelagerten Betätigungshebel (12), der mit einem ersten Arm über den Umfang der Räder hinausragt und einen zweiten Arm aufweist, an dem ein ebenfalls zwischen den Rädern am Tragkörper angebrachtes, bewegliches Arretierglied (11) federnd anliegt, das durch Verschwenken des Betätigungshebels von dessen zweitem Arm von einer Ruhestellung in eine Arretierstellung bringbar bzw. zur Rückkehr in die Ruhestellung freigebbar ist, derart, daß der zweite Arm des Betätigungshebels in der Arretierstellung in bezug auf eine die Schwenkachse des Betätigungshebels und die Eingriffsstelle des Arretiergliedes verbindende Linie eine Übertotpunktlage einnimmt, wobei ein Abschnitt (19) des Arretiergliedes (11) in der Arretierstellung über die die Räder (3) tangierende Ebene (20), die bei bestimmungsgemäß montierter Rolle und bei in seiner Ruhestellung befindlichem Arretierglied (11) mit der Lauffläche für die Räder zusammenfällt, übersteht und dadurch die Räder (3) von der Lauffläche abhebt, dadurch gekennzeichnet, daß das Arretierglied (11) als Hebel ausgebildet ist und mit dem einen Ende um einen mit waagerechtem Abstand zur Radachse (2) und zur Schwenkachse des Betätigungshebels (12) liegenden ortsfesten Lagerbock (13) schwenkbar ist.

2. Rolle nach Anspruch 1, dadurch gekennzeichnet, daß der genannte Abschnitt (19) des Arretiergliedes (11) im Bereich des von der Achse (2) der Räder (3) auf die genannte Ebene (20) gefällten Lotes angeordnet ist.

3. Rolle nach Anspruch 1 mit einer zu der genannten Ebene vertikalen Schwenkachse, dadurch gekennzeichnet, daß der genannte Abschnitt (62) des Arretiergliedes (51) im Bereich der Verlängerung der Schwenkachse (45) angeordnet ist.

4. Rolle nach einem der vorhergehenden Ansprüche, dadurch gekennzeichnet, daß der Betätigungshebel (12, 56, 59, 60) in bezug auf die genannte Ebene (20, 65) senkrecht über der Stelle, an der das Arretierglied in der Arretierstellung mit dem genannten Abschnitt (19, 62) über diese Ebene übersteht, am Tragkörper (1, 41) schwenkbar gelagert ist.

5. Rolle nach den Ansprüchen 2 und 4, dadurch gekennzeichnet, daß der Betätigungshebel (12) auf der gleichen Achse (2) gelagert ist wie die Räder (3) und den Tragkörper (1) mit einem gabelförmigen Abschnitt (21) umgreift.

6. Rolle nach einem der Ansprüche 2, 4 und 5 dadurch gekennzeichnet, daß das Arretierglied (11) ein gabelförmiges Ende aufweist, mit dem er im Bereich seiner im Abstand von der Achse (2) der Räder (3) angeordneten Lagerstelle (15) den Tragkörper (1) umgreift.

7. Rolle nach Anspruch 6, dadurch gekennzeichnet, daß das Arretierglied (11) an seinem gabelförmigen Ende mit einem abgeflachten Lagerstift (15) versehen ist, mit dem er in eine sich in einem Lagerblock (13) befindliche Lagerbohrung (14) eingehängt ist, die durch einen Schlitz (16), dessen lichte Weite der Dicke des abgeflachten Abschnittes (17) des Lagerstiftes (15) entspricht, mit einer Außenseite des Lagerblockes (13) verbunden ist.

8. Rolle nach einem der Ansprüche 5 bis 7, dadurch gekennzeichnet, daß das Arretierglied (11) im Querschnitt U-förmig ausgebildet ist und der Betätigungshebel (12) zwischen die Wandungen des Arretiergliedes (11) eingreift.

9. Rolle nach einem der Ansprüche 5 bis 7, dadurch gekennzeichnet, daß der Betätigungshebel (112) mit dem Arretierglied (111) durch einen Kniehebel (130) verbunden ist.

10. Rolle nach Anspruch 9, dadurch gekennzeichnet, daß der Kniehebel (130) zwischen den Wandungen des Betätigungshebels (112) und des Arretiergliedes (111) gelagert ist, die beide im Querschnitt U-förmig ausgebildet sind.

11. Rolle nach den Ansprüchen 3 und 4, dadurch gekennzeichnet, daß das Arretierglied (51) von dem federnden Schenkel eines im wesentlichen U-förmigen Formteiles (52) gebildet wird, dessen anderer Schenkel (53) an der Unterseite des Tragkörpers (41) befestigt ist.

12. Rolle nach Anspruch 11, dadurch gekennzeichnet, daß der andere Schenkel (53) des Formteiles (52) am Tragkörper (41) mittels federnder Zungen (54) und/oder Raststiften (55) gehalten und fixiert ist.

13. Rolle nach Anspruch 11 oder 12, dadurch gekennzeichnet, daß der am Tragkörper (41) anliegende Schenkel (53) des Formteiles (52) an seiner dem federnden Schenkel (51) zugewandten Seite eine Lagerschale (61) für die Schwenkachse des Betätigungshebels aufweist.

14. Rolle nach einem der Ansprüche 11 bis 13, dadurch gekennzeichnet, daß der Betätigungshebel aus zwei parallelen Teilen (59) besteht, die zu beiden Seiten des Formteiles (52) angeordnet sind und an einem Ende durch eine als Pedal dienende Platte (60) und am anderen Ende durch einen Quersteg (56) miteinander verbunden sind, der sich in einer zur Längsrichtung des Betätigungshebels im wesentlichen senkrechten Ebene erstreckt und von dessen Rändern (57, 58) der eine die Schwenkachse des Betätigungshebels und der andere das Ende des am Arretierglied anliegenden zweiten Armes des Betätigungshebels bildet.

15. Rolle nach den Ansprüchen 13 und 14, dadurch gekennzeichnet daß der die Schwenkachse des Betätigungshebels bildende Rand (57) des Quersteges (56) in die Lagerschale (61) eingreift.

16. Rolle nach einem der Ansprüche 11 bis 15, dadurch gekennzeichnet, daß der das Arretierglied (51) bildende federnde Schenkel an seinem Ende ein den überstehenden Abschnitt bildendes Kopfteil (62) aufweist, das an seiner dem anderen Schenkel (53) zugewandten Seite eine am Ende des zweiten Armes des Betätigungshebels anliegende Gleitfläche (63) und eine die Arretierstellung definierende Rastnut (64) aufweist.

17. Rolle nach einem der Ansprüche 11 bis 16, dadurch gekennzeichnet, daß das Formteil (52) aus einem federelastischem Kunststoff besteht.

**Claims**

1. Securable castor, in particular for movable parts of shop equipment, with two wheels (3), which are disposed one either side of a supporting body (1), on a common shaft (2) which passes through the supporting body, with an operating lever (12) which is pivotably mounted between the wheels on the supporting body and protects over the periphery of the wheels with a first arm and comprises a second arm, against which there abuts resiliently a movable blocking device (11) which is also mounted between the wheels on the supporting body and which, as a result of the operating lever being pivoted by its second arm, may be brought from a rest position into a blocking position or be released in order to return to the rest position in such a manner that in the blocked position the second arm of the operating lever assumes a top dead centre position in relation to a line which connects the pivot axis of the operating lever and the point of engagement of the blocking device, wherein a section (19) of the blocking device (11), in the blocked position, protects over the plane (20) which is tangential to the wheels (3) and, when the castor is mounted accordingly, and when the blocking member (11) is in its rest position, coincides with the running surface of the wheels thus raising the wheels (3) from the running surface, characterised in that the blocking device (11) is formed as a lever and can be pivoted by one end about a fixed floor stand (13) which is at a horizontal distance with respect to the wheel shaft (2) and with respect to the pivot axis of the operating lever (12).

2. Castor according to claim 1, characterised in that the said section (19) of the blocking device (11) is arranged in the area of the perpendicular dropped from the shaft (2) of the wheels (3) onto the said plane (20).

3. Castor according to claim 1 with a pivot axis that is vertical to the said plane, characterised in that the said section (62) of the blocking device (51) is arranged in the area of the extension of the pivot axis (45).

4. Castor according to one of the preceding claims, characterised in that the operating lever (12, 56, 59, 60) is rotatably mounted on the support body (1, 41) so as to be perpendicular to the said plane (20, 65), above the point at which the said section (19, 62) of the blocking device projects above this plane in the blocked position.

5. Castor according to claims 2 and 4, characterised in that the operating lever (12) is mounted on the same shaft (2) as the wheels (3) and engages around the supporting body (1) with a fork-shaped section (21).

6. Castor according to one of claims 2, 4 and 5, characterised in that the blocking device (11) comprises a fork-shaped end which engages around the supporting body (1) in the vicinity of the mounting position (15) thereof disposed, this being at a distance from the shaft (2) of the wheels (3).

7. Castor according to claim 6, characterised in that the blocking device (11) is provided at its fork-shaped end with a flat hinge pin (15), by means of which it is suspended in a bearing bore (14) which is located in a bearing block (13) and which is connected to one external side of the bearing block (13) by means of a slit (16), of which the inside width corresponds to the thickness of the flattened section (17) of the hinge pin (15).

8. Castor according to one of claims 5 to 7, characterised in that the blocking device (11) is U-shaped in cross-section and the operating lever (12) engages between the walls of the blocking device (11).

9. Castor according to one of claims 5 to 7, characterised in that the operating lever (112) is connected to the blocking device (111) by means of an elbow lever (130).

10. Castor according to claim 9, characterised in that the elbow lever (130) is mounted between the walls of the operating lever and the blocking device (111), both of which are U-shaped in cross-section.

11. Castor according to claims 3 and 4, characterised in that the blocking device (51) is formed by the resilient leg of an essentially U-shaped part (52), the other leg (53) of which is affixed to the underside of the supporting body (41).

12. Castor according to claim 11, characterised in that the other leg (53) of the part (52) is held and fixed on the supporting body (41) by means of resilient tongues (54) and/or locking pins (55).

13. Castor according to claim 11 or 12, characterised in that the leg (53) of the part (52) abutting on the supporting body (41) comprises on the side thereof which faces the resilient leg (51) a bush (61) for the pivot shaft of the operating lever.

14. Castor according to one of claims 11 to 13, characterised in that the operating lever comprises two parallel parts (59), which are disposed on both sides of the part (52) and which are connected to each other at one end by a plate (60) which serves as a pedal and at the other end by a crossbar (56), which extends in a plane that is essentially perpendicular to the longitudinal direction of the operating lever and of which one of the edges (57, 58) forms the pivot axis of the operating lever and the other forms the end of the second arm of the operating lever abutting the blocking device.

15. Castor according to claims 13 and 14, characterised in that the edge (57) of the crossbar (56) which forms the pivot axis of the operating lever engages in the bush (61).

16. Castor according to one of claims 11 to 15, characterised in that the resilient leg forming the blocking device (51) is provided, on its end, with a head piece (62) which forms the protruding section and which is provided, on the side thereof facing the other leg (53), with a sliding surface (63) abutting against the end of the second arm of the operating lever and with a locking groove (64) definig the blocking position.

17. Castor according to one of claims 11 to 16, characterised in that the part (52) consists of a resilient plastics material.

**Revendications**

1. Dispositif roulant pouvant être bloqué, en particulier pour des parties mobiles d'installations de magasins, comprenant deux roues (3) disposées sur deux côtés d'un corps porteur (1) sur un axe commun passant à travers ledit corps porteur, comportant, monté de manière pivotable entre les roues sur ledit corps porteur, un levier de manoeuvre (12) qui fait saillie par un premier bras du pourtour des roues et qui présente un deuxième bras sur lequel s'applique de manière élastique un élément de blocage mobile (11) fixé également entre les roues sur le corps porteur, cet élément de blocage (11) pouvant être amené par pivotement du levier de manoeuvre d'une position de repos sur le deuxième bras du levier de manoeuvre vers une position de blocage et être dégagé pour retourner dans la position de repos, de telle sorte que le deuxième bras du levier de manoeuvre dans la position de blocage occupe, par rapport à une ligne reliant l'axe de pivotement du levier de manoeuvre et le point d'intervention de l'élément de blocage, une situation de point mort haut, une section (19) de l'élément de blocage (11) faisant saillie, dans la position de blocage, du plan (20) tangentiel aux roues (3) qui coïncide avec la surface de roulement des roues si le dispositif roulant est monté de manière conforme à sa destination et si l'élément de blocage (11) se trouve dans sa position de repos et soulevant de ce fait les roues (3) de la surface de roulement, caractérisé par le fait que l'élément de blocage (11) est réalise sous la forme d'un levier et est pivotable par l'une de ses extrémités autour d'un coussinet (13) fixe situé à une certaine distance horizontale de l'axe des roues (2) et de l'axe de pivotement du levier de manoeuvre (12).

2. Dispositif roulant selon la revendication 1, caractérisé par le fait que ladite section (19) de l'élément de blocage (11) est disposée dans la zone de la perpendiculaire allant de l'axe (2) des roues (3) sur ledit plan (20).

3. Dispositif roulant selon la revendication 1, comportant un axe de pivotement perpendiculaire audit plan, caractérisé par le fait que ladite section 62 de l'élément de blocage (51) est disposée dans la zone de prolongement de l'axe de pivotement (45).

4. Dispositif roulant selon l'une des revendications précédentes, caractérisé par le fait que le levier de manoeuvre (12, 56, 59, 60) est monté de manière pivotable sur le corps porteur (1, 41), par rapport audit plan (20, 65) sur la verticale et au-dessus de l'emplacement où l'élément de blocage, dans la position de blocage, fait saillie de ce plan par ladite section (19, 62).

5. Dispositif roulant selon les revendications 2 et 4. caractérisé par le fait que le levier de manoeuvre (12) est monté sur la même axe (2) que les roues (3) et entoure le corps porteur (1) par une section en forme de fourche (21).

6. Dispositif roulant selon l'une des revendications 2, 4 et 5, caractérisé par le fait que l'élément de blocage (11) présente une extrémité en forme de fourche par laquelle il entoure le corps porteur (1) dans la zone de son point d'appui (15) disposé a une certaine distance de l'axe (2) des roues (3).

7. Dispositif roulant selon la revendication 6, caractérisé par le fait que l'élément de blocage (11) est muni sur son extrémité en forme de fourche d'une broche d'appui aplatie (15) par laquelle il est accroché dans l'alésage (14) se trouvant dans un coussinet (13), cet alésage étant relié par une fente (16), dont la largeur correspond a l'épaisseur de la section aplatie (17) de la broche (15), à un côté extérieur du coussinet (13).

8. Dispositif roulant selon l'une des revendications 5 à 7, caractérisé par le fait que l'élément de blocage (11) est réalisé en section en forme de U et que le levier de manoeuvre (12) pénètre entre les parois dudit élément de blocage (11).

9. Dispositif roulant selon l'une des revendications 5 à 7, caractérisé par le fait que le levier de manoeuvre (112) est relié par un levier à genouillère (130) à l'élément de blocage (111).

10. Dispositif roulant selon la revendication 9, caractérisé par le fait que le levier à genouillère (130) est monté entre les parois du levier de manoeuvre (112) et de l'élément de blocage (111), qui sont tous deux réalisés avec une section transversale en forme de U.

11. Dispositif roulant selon les revendications 3 et 4, caractérisé par le fait que l'élément de blocage (51) est constitué d'une branche élastique d'une pièce moulée (52) sensiblement en forme de U dont l'autre branche (53) est fixée sur le côté inférieur du corps porteur (41).

12. Dispositif roulant selon la revendication 11, caractérisé par le fait que l'autre branche (53) de la pièce moulée (52) est maintenue fixée sur le corps porteur (41) au moyen de languettes élastiques (54) et/ou de tiges d'encastrement (55).

13. Dispositif roulant selon la revendication 11 ou 12, caractérisé par le fait que la branche (53) de la pièce moulée appliquée contre le corps porteur (41) présente sur son côté orienté vers la branche élastique (51) un demi-coussinet (61) pour l'axe pivotant du levier de manoeuvre.

14. Dispositif roulant selon l'une des revendications 11 à 13, caractérisé par le fait que le levier de manoeuvre est constitué de deux parties parallèles (59) qui sont disposées des deux côtés d'une pièce moulée (52) et sont reliées à une extrémité par une plaque (60) servant de pédale et sur l'autre extrémité par une traverse (56) qui s'étend dans un plan sensiblement perpendiculaire à la direction longitudinale du levier de manoeuvre et dont l'un des bords (57, 58) constitue l'axe de pivotement du levier de manoeuvre et l'autre bord l'extrémité du deuxième bras du levier de manoeuvre s'appliquant contre l'élément de blocage.

15. Dispositif roulant selon les revendications 13 et 14, caractérisé par le fait que le bord 57 de la traverse 56 qui forme l'axe de pivotement du levier de manoeuvre pénètre dans le demi-coussinet (61).

16. Dispositif roulant selon l'une des revendications 11 à 15, caractérisé par le fait que la branche élastique constituant l'élément de blocage (51) présente sur son extrémité une partie proéminente (62) constituant la section faisant saillie qui présente sur son côté orienté vers l'autre branche (53) une face lisse (63) s'appliquant à l'extrémité du deuxième bras du levier de manoeuvre et une gorge d'encastrement (64) définissant le point de blocage.

17. Dispositif roulant selon l'une des revendications 11 à 16, caractérisé par le fait que la pièce moulée (52) est réalisée en matière plastique élastique.

Fig.1

Fig. 4

Fig. 2

Fig. 3

Fig. 5

Fig. 6

EP 0 275 959 B1

Fig. 7

Fig. 8

Fig. 9

14